# EUROPÄISCHE PATENTANMELDUNG

(11) **EP 4 432 403 A1**
(43) Veröffentlichungstag der Anmeldung: **18.09.2024**
(21) Anmeldenummer: 24157118.1
(22) Anmeldetag: 12.02.2024
(51) Int. Cl.: H01M 8/0206, H01M 8/0202, H01M 8/028, H01M 8/0286

(54) **VERFAHREN ZUR HERSTELLUNG VON BIPOLARPLATTEN FÜR BRENNSTOFFZELLEN MITTELS FÜGEN**

(30) Priorität: 14.02.2023 DE 102023103546
(71) Anmelder: Fraunhofer-Gesellschaft zur Förderung der angewandten Forschung e.V., 80686 München (DE); Technische Universität Dresden Körperschaft des öffentlichen Rechts, 01069 Dresden (DE)
(72) Erfinder: Zwick, Axel, 01277 Dresden (DE); Roch, Teja, 01277 Dresden (DE); Beyer, Eckhard, 01277 Dresden (DE); Langer, Maurice, 01277 Dresden (DE); Pohl, Eric, 01277 Dresden (DE)
(74) Vertreter: Pfenning, Meinig & Partner mbB

(57) **Zusammenfassung**

Jeweils von einer Rolle (5) wird plattenförmiges metallisches Material (1.1, 1.2) in Richtung einer Einrichtung (4) zur Vereinzelung gefördert. In dem Material (1.1, 1.2) werden nutenförmige Vertiefungen (6) und/oder Erhebungen (7) ausgebildet. sind oder nach dem Abwickeln von der jeweiligen Rolle (5) durch Umformung ausgebildet werden. Die Vertiefungen (6) und/oder Erhebungen (7) greifen beim Fügen ineinander. In Vertiefungen (6) wird ein Kleb-Dichtmaterial (8) vor dem Fügen eingebracht.

Bei einer Bewegung der plattenförmigen Materialien (1.1, 1.2) durch den Spalt zwischen Walzen wird mindestens ein Laserstrahl in die Randbereiche der plattenförmigen Materialien (1.1, 1.2) gerichtet und eine fluiddichte stoffschlüssige Verbindung der beiden Materialien (1.1, 1.2) durch die Kombination der Erwärmung mit der im Walzenspalt wirkenden Druckkraft auf die zwei plattenförmigen Materialien (1.1, 1.2) in den äußeren Randbereichen und in den Bereichen in denen Vertiefungen (6) und/oder Erhebungen (7) mittels Kleb-Dichtmaterials (8) ausgebildet wird und im Anschluss daran die Vereinzelung in einzelne Bipolarplatten durchgeführt wird.

## Beschreibung

Die Erfindung betrifft ein Verfahren zur Herstellung von Bipolarplatten für Brennstoffzellen mittels Fügen. Dabei soll das Verfahren in einem kontinuierlichen Prozess durchgeführt werden, bis die mit dem Verfahren erhaltenen Bipolarplatten vereinzelt werden.

Brennstoffzellen werden in zukünftigen Automobilen, Lastkraftwagen und anderen mobilen Fahrzeugen ein wesentlicher Bestandteil sein. Hierbei können Sie sowohl elektrischen Strom zum Direktantrieb eines Elektromotors liefern als auch zum Laden von Batterien verwendet werden, die entsprechende Elektromotoren antreiben. Neben erheblichen technischen Fortschritten insbesondere im Bereich MEA (Membran-Elektroden-Anordnung) ist die Herstellung der Brennstoffzellen noch relativ teuer, so dass beispielsweise Automobile mit einem Brennstoffzellenantrieb noch nicht wirtschaftlich verkauft werden können. Ein Brennstoffzellenstapel (Stack) ist grundsätzlich aus sich wiederholenden übereinander gestapelten Brennstoffzellen aufgebaut. Eine einzelne solche Zelle besteht aus einer MEA, die z.B. aus einem protonenleitenden Polymer besteht, das jeweils eine Elektrodenbeschichtung beidseitig aufweist. Durch die Polymermembran können Wasserstoffionen hindurch diffundieren und elektrischer Strom kann über einen Verbraucher zur Kathode geleitet werden. Die Elektrodenbeschichtung auf der Polymermembran bzw. die Katalysatoren bestehen typischerweise aus Platin, z.B. in Form von Nanopartikeln. An diese Elektroden schließt sich jeweils eine elektronen- und eine gasleitende Gasdiffusionsschicht (GDL), typischerweise aus Kohlenstofffasern, an. Die zweite Seite der GDL steht in Kontakt zu einer Seite einer Bipolarplatte (BPP). Eine solche Bipolarplatte besteht hierbei aus zwei metallischen Halbschalen die Erhöhungen und Vertiefungen (sog. Flow Field und Ports) aufweisen können. Diese dienen sowohl der Verteilung sowie Zuleitung von gasförmigen Medien (u.a. Sauerstoff und Wasserstoff), der Ableitung von Reaktionsprodukten (z. B. Wasser) sowie einer sich innerhalb der Bipolarplatte ergebenden Kanalstruktur zur Kühlung der Platte. Durch diese Kühlkanäle kann entstehende Reaktionswärme abgeführt werden. Weiterhin weisen metallische Bipolarplatten eine Beschichtung auf, die beispielsweise eine Kohlenstoffbeschichtung, die den elektrischen Kontaktwiderstand der Metalloberflächen verringert, ist. Weiterhin ist es vorteilhaft, wenn eine Schweißnaht eine zuvor aufgebrachte Kohlenstoffschicht, die auch einen Korrosionsschutz bietet, nicht durchdringt. Dies insbesondere bei sehr dünnen Blechen (0,2 mm - 0,05 mm Blechdicke) zu erreichen ist jedoch extrem herausfordernd.

Gefügt werden die Bipolarplatten bisher typischerweise durch Laserschwei-ßungen, indem die Platten gegeneinander gespannt werden und mittels eines einseitig zugeführten Laserstrahles verschweißt werden. Bei unzureichender Spanntechnik der Platten, Variationen der Laserleistung, einem Spalt zwischen den zu fügenden Platten oder Variationen der Fokuslage des Laserstrahls kann es hierbei zu Schweißnahtfehlern kommen. Weiterhin kann der Wärmeeintrag des Laserprozesses zu thermischen Spannungen in der jeweiligen Platte führen und diese deformieren, so dass beispielsweise ein Brennstoffzellenstapel nicht fehlerfrei aufgebaut werden kann. Metallische Platten bestehen hierbei typischerweise aus Edelstahl oder Titan.

Alternative Verfahren/Konzepte zur Herstellung von Brennstoffzellen in Großserien gehen davon aus, dass die Brennstoffzellenfertigung in großen Teilen in Bandverfahren und kontinuierlich durchgeführt werden sollte. Mindestens der Beschichtungsprozess wird hierbei jedoch entkoppelt von den restlichen Prozessschritten gesehen.

Aufgabe der Erfindung ist es, Möglichkeiten anzugeben mit denen plattenförmiges Material kontinuierlich einem Fügen zugeführt werden kann und durch das Fügen keine bzw. nur eine geringfügige Beeinträchtigung des metallischen Materials und auch eine sichere langzeitstabile fluiddichte Abdichtung in bestimmten Bereichen von Bipolarplatten erreicht werden können.

Erfindungsgemäß wird diese Aufgabe mit einem Verfahren, das die Merkmale des Anspruchs 1 aufweist, gelöst. Vorteilhafte Weiterbildungen und Ausgestaltungen der Erfindung können mit in abhängigen Merkmalen bezeichneten Merkmalen realisiert werden.

Bei dem Verfahren wird jeweils von einer Rolle plattenförmiges metallisches Material (Stahl bzw. Titan) paarweise und synchron in Richtung einer Einrichtung, die zur Vereinzelung von Brennstoffzellen ausgebildet ist, gefördert.

In dem plattenförmigen Material sind senkrecht zur Vorschubbewegungsrichtung des plattenförmigen Materials und von einem äußeren Randbereich bis zu einem gegenüberliegend angeordneten äußeren Randbereich ausgebildete nutenförmige Vertiefungen und/oder Erhebungen ausgebildet oder sie werden nach dem Abwickeln von der jeweiligen Rolle durch Umformung ausgebildet. Die nutenförmigen Vertiefungen und Erhebungen sind bzw. werden so ausgebildet, dass die jeweils komplementär ausgebildeten nutenförmigen Vertiefungen und/oder Erhebungen in den zwei plattenförmigen Materialien beim Fügen formschlüssig ineinandergreifen (Nut-Feder-Prinzip). Dieser Prozessschritt ermöglicht eine vereinfachtere Führung und Positionierung der beiden BPP-Hälften zueinander sowie ermöglicht er fügetechnische Vorteile hinsichtlich auftretender Schälbeanspruchungen, da durch das Nut-Feder-Prinzip nicht nur die effektive Klebfläche vergrößert wird, sondern auch eine Änderung der Beanspruchungsrichtung erreicht werden kann.

In nutenförmige Vertiefungen, die an mindestens einem der zwei plattenförmigen Materialien ausgebildet sind, wird ein organisches (polymeres) Kleb-Dichtmaterial vor dem Fügen eingebracht.

Zusätzlich sind parallel zur Vorschubbewegungsrichtung der plattenförmigen Materialien in den zwei gegenüberliegend angeordneten äußeren Randbereichen ebenfalls nutenförmige Vertiefungen und/oder Erhebungen lückenlos ausgebildet oder diese werden nach dem Abwickeln von der jeweiligen Rolle durch Umformung ausgebildet. Die jeweils komplementär ausgebildeten nutenförmigen Vertiefungen und/oder Erhebungen in den zwei plattenförmigen Materialien greifen beim Fügen formschlüssig ineinander.

Vorteilhafter ist es, wenn in den äußeren Randbereichen parallel zur Vorschubbewegungsrichtung der zwei gleichen plattenförmigen Materialien bei einer Bewegung der zwei plattenförmigen Materialien aufeinander zu durch den Spalt zwischen zwei rotierenden Walzen, bei der die zwei plattenförmigen Materialien mit ihren aufeinander zu weisenden Oberflächen in Kontakt gebracht werden, mindestens ein Laserstrahl in die zwei sich gegenüberliegend angeordneten äußeren Randbereiche der plattenförmigen Materialien gerichtet wird, so dass dort eine lokal definierte Erwärmung der plattenförmigen Materialien in den Randbereichen erreicht und dann im jeweiligen Walzenspalt eine fluiddichte stoffschlüssige Verbindung der beiden plattenförmigen Materialien durch die Kombination der Erwärmung mit der im Walzenspalt wirkenden Druckkraft auf die zwei plattenförmigen Materialien in den äußeren Randbereichen ausgebildet wird. Durch die Kombination der beiden unterschiedlichen Durchführungsmöglichkeiten der Fügung in senkrechter und paralleler Richtung in Bezug zur Vorschubbewegungsrichtung der plattenförmigen Materialien kann die Produktivität gesteigert werden. Das Fügen mittels Laserstrahl und Walzendruck kann man auch als Walz unterstütztes Fügen bezeichnen und ähnelt in seiner Anordnung dem Laserwalzplattieren. Die maximale Temperatur mit der die Erwärmung der plattenförmigen Materialien mit Laserstrahlung erreicht wird, sollte maximal die Schmelztemperatur des plattenförmigen Materials betragen, bevorzugt jedoch mindestens 5° C kleiner sein.

Unterstützend kann neben der Plattierung der Materialien selbst, auch ein lokales Heften der plattenförmigen Elemente, der Bippolar-Platten-Hälften (BPPH) unmittelbar neben dem mit organischem (polymeren) Kleb-Dichtmaterial ausgestatteten Innenbereichen der jeweiligen Zelle zur Reduzierung auftretender Schälbeanspruchungen auf die Dichtnaht mittels Laser im Walzspalt, bevorzugt engmaschig ausgeführt werden.

In den Bereichen der nutenförmigen Vertiefungen und/oder Erhebungen wird mittels des dort applizierten und ausgehärteten oder vernetzten polymeren Kleb-Dichtmaterials eine stoffschlüssige fluid- sowie gasdichte Verbindung ausgebildet.

Im Anschluss daran kann eine weitere Aufrechterhaltung der Fügekraft erforderlich sein, um eine vollständige chemische Aushärtung oder physikalische Abbindung des Kleb-Dichtmaterials zu erreichen. Dies erfolgt in einer beispielhaften Ausgestaltung dadurch, dass jeweils den der BPP-Hälften entsprechend ausgebildete Formbacken in einem Corrugator bzw. einer Doppelbandpressenanordnung genutzt werden. Die erzielbare Vorschubgeschwindigkeit liegt hierbei bei mehreren m/min.

Integriert in diesem Prozessschritt oder nachlagernd angeordnet erfolgt die Vereinzelung in einzelne Bipolarplatten für Brennstoffzellen in der entsprechend ausgebildeten Einrichtung mit einem Trennverfahren.

Nach dem Applizieren des polymeren Klebe-Dichtmaterials in die nutenförmigen Vertiefungen an mindestens einem der zwei plattenförmigen Materialien und dem formschlüssigen Eingreifen einer komplementär ausgebildeten Kontur des jeweils anderen plattenförmigen Materials zum Fügen kann ein Energieeintrag erfolgen, der zur Aushärtung oder Vernetzung des Kleb-Dichtmaterials führt und die zwei plattenförmigen Materialien können mittels Druckkraftwirkung gegeneinandergepresst werden. Auch hierfür kann man vorteilhaft Walzen einsetzen, durch deren Walzenspalt die plattenförmigen Materialien bewegt werden.

Vorteilhaft kann der mindestens eine Laserstrahl zur lokal definierten Erwärmung der plattenförmigen Materialien in den äußeren Randbereichen in den Spalt zwischen den sich aufeinander zu bewegenden plattenförmigen Materialien gerichtet werden, bevor die plattenförmigen Materialien im Spalt zwischen den jeweiligen Walzen zusammengedrückt werden.

Bei einer weiteren Ausgestaltung kann eine direkte Erwärmung des polymeren Kleb-Dichtmaterials im Walzspalt durch Bestrahlung mittels defokussierter Laserstrahlung (bspw. Wellenlängenbereich 10,6 µm), zur Initiierung einer beschleunigten chemischen Aushärtung oder auch dem physikalischen Abbinden durchgeführt werden.

Auch um Durchbrechungen, die für eine Zufuhr von Brennstoff oder Oxidationsmittel und eine Abführung von Wasser und nicht reagiertem Brennstoff und Oxidationsmittel in den plattenförmigen Material ausgebildet sind, sollten nutenförmige Vertiefungen und/oder Erhebungen ausgebildet sein oder werden, die beim Fügen formschlüssig ineinandergreifen und vor dem Fügen in Vertiefungen Kleb-Dichtmaterial eingebracht werden.

Die nutenförmigen Vertiefungen und die Erhebungen können mittels Walzprägen ausgebildet werden. Dies kann auch erst nach dem Abwickeln von der jeweiligen Rolle erreicht werden.

Vertiefungen und Erhebungen sollten in den zwei plattenförmigen Materialien so ausgebildet werden, dass nach dem Fügen im Bereich zwischen einer Vertiefung in einem plattenförmigen Material und einer Erhebung, die am jeweils anderen plattenförmigen Material ausgebildet ist, jeweils ein Hohlraum vorhanden ist, der mit dem Kleb-Dichtmaterial ausgefüllt wird.

Vertiefungen und/oder Erhebungen können asymmetrisch oder symmetrisch ausgebildet werden, worauf noch eingegangen wird.

Vorteilhaft im Sinne der Erfindung ist es, dass die metallischen plattenförmigen Materialien exakt zueinander positioniert werden können und eine Fügung ohne Verletzung der Kohlenstoffbeschichtung an Oberflächen der plattenförmigen Materialien und mit minimalem Wärmeeintrag realisiert werden kann.

Dies kann mittels Laserplattieren geschehen, in dem bevorzugt ein fokussierter Laserstrahl zwischen zwei aufeinander zulaufende plattenförmigen Materialien gerichtet wird und die plattenförmigen Materialien im Bereich der Fügung über Walzen in Kontakt gebracht werden und dabei eine Druckkraft auf die zufügenden plattenförmigen Materialien wirkt. Hierdurch werden die plattenförmigen Materialien im jeweiligen äußeren Randbereich parallel zu ihrer Vorschubbewegungsrichtung stoffschlüssig miteinander verbunden und eine elektrische Kontaktierung wird erzielt. Fügungen der plattenförmigen Materialien rechtwinklig zu ihrer Vorschubbewegungsrichtung sind hiermit, aufgrund der begrenzten Geschwindigkeiten der Strahlführung des Lasers quer zur Vorschubrichtung, nur schwierig zu realisieren. Hierzu ist es vorteilhaft umsäumende und die Kühlkanäle abdichtende Fügungen in Form von Klebungen mit Dichtwirkung auszuführen. Hierdurch kann der Wärmeeintrag in die plattenförmigen Materialien reduziert werden. Derartige Dichtklebungen können beispielsweise erzielt werden, in dem mittels einer Walze, vorkonfektionierte Klebbänder, im Sprühauftrag, durch Dispensen und Jetten, einem Rakelprozess oder im Siebdruck das polymere Kleb-Dichtmaterial auf mindestens einen der Fügepartner in einem durch Umformen in Form einer Vertiefung erhaltenen Bereich aufgebracht wird.

Weiterhin bietet das Verfahren den Vorteil bandtauglich zu sein. Weitere Varianten bestehen in der Integration einer beheizten Walze, durch die analog zum Rollnahtschweißen, Widerstandsschweißen, Siegelwalzen (Analog Verbinden Blisterverpackung Metallfolie und Kunststoff) oder auch induktivunterstützen Siegeln mit Walzen sowohl die Aufbringung des erforderlichen Fügedrucks in den Verbindungsbereichen als auch eine lokale Erwärmung zur Aushärtung oder dem physikalischen Abbinden des polymeren Kleb-Dichtmaterials erreicht werden.

Eine Verbesserung zur Fertigung von Brennstoffzellen ist erreichbar, wenn die gesamte Fertigung in einer Prozesskette bzw. in einem Bandverfahren durchgeführt werden kann, was mit der Erfindung erreicht wird. Dafür sollten möglichst viele Produktionsschritte im Bandverfahren durchgeführt werden und eine Vereinzelung des Bandes in BIP oder BIP+ GDL oder BIP+ MEA erfolgt möglichst spät in der Prozesskette. In diesem Fall handelt es sich um ein Rolle zu Platte Verfahren. Aus derart vereinzelten BIP kann am Ende der Prozesskette ein ganzer Brennstoffzellenstapel bestehend aus einer Vielzahl gestapelter BIP+ MEA und mit entsprechender Dichtungstechnik sowie Endstücken aufgebaut werden. Es kommt während des Fertigungsprozesses anders als üblich zu keiner Verminderung des Korrosionsschutzes im Außenbereich der beschichteten mit den zwei plattenförmigen Materialien gebildeten BIP-Halbschalen infolge eines Schweißprozesses, der maßgeblich zur Erzielung einer elektrischen Kontaktierung sowie Abdichtung der BIP-Halbschalen erforderlich ist. Hierdurch kann eine optimierte Prozessreihenfolge mit höherer Fertigungsrate während eines kontinuierlichen Bandverfahrens erzielt werden.

Das Bandhandling kann durch das Bandverfahren und die Verwendung von Walzen zur Fixierung der Bleche beim Kleben und Dichten vereinfacht werden. Auf die Verwendung einer Schweißbrille (wie im Stand der Technik üblich) kann hierbei vollständig verzichtet werden, da der erforderliche Fügedruck zur Erzielung eines technischen 0-Spalts zwischen den BIP-Halbschalen außerhalb des Einstrahlbereiches des Laserstrahls durch das Walzenpaar aufgebracht wird. Hierdurch kann die Dicke der eingesetzten Plattenmaterialien im Vergleich zum Stand der Technik mit 100 µm auf ≤ 80 µm, vorteilhafter Weise ≤ 50 µm reduziert werden.

Das Verfahren reduziert den Wärmeeintrag in das plattenförmige Material im Vergleich zu konventionellen Schweißverfahren.

Klebungen können hierbei effektiv sowohl zur Abdichtung der BIP-Halbschalenränder im umlaufenden Außenbereich als auch zwischen den einzelnen Kanälen, die mit den Durchbrechungen gebildet werden und Elementen eines Flow-Fields, mit dem eine gleichmäßige Verteilung von Brennstoff und Oxidationsmittel über die gesamte elektrochemisch wirksame Fläche einer Brennstoffzelle ermöglicht wird, eingesetzt werden. Eine weitere Möglichkeit besteht in der elektrischen Kontaktierung vorzugsweise durch einen anisotropen Leitungsmechanismus zwischen den BIP-Halbschalen. Vorschubgeschwindigkeiten der plattenförmigen Materialien im Bereich > 5 m/min, vorteilhafter Weise > 10 m/min ermöglichen einen kontinuierlichen Fertigungsprozess mit gegenüber dem Stand der Technik signifikant gesteigerter Produktivität. Für metallische BIP ist der Stand der Technik heute das vollständige Schweißen zur Abdichtung der BIP als auch die elektrische Kontaktierung im sog. Flow-Field-Bereich.

Zur Abdichtung von BIP werden neben Feststoffdichtungen üblicherweise Flüssigdichtungen sog. Form-in-Place Gaskets (FIPG) eingesetzt. Diese finden jedoch vorrangig im Außenbereich von Biploarzellen im Bereich der MEA Einsatz. Die Abdichtung innerhalb metallischer BIP also außerhalb ihrer äußeren Randbereiche erfolgt in der Serienfertigung bisher maßgeblich durch Schweißen.

Die Erfindung erschließt die Möglichkeit zur elektrischen Kontaktierung im Bereich des innenliegenden Flow-Fields (aktiver Bereich) als auch im hierzu umliegenden Dichtbereich mittels Kleben.

Im Stand der Technik ist vorrangig das diskontinuierliche Fügen mittels Kleben bekannt. Dieser Prozess ist zumeist energie- und zeitintensiv.

Entgegen dem Stand der Technik soll bei der Erfindung nicht die Abdichtung zwischen MEA und Bipolarzelle (Elektroden) als sogenannte Anode Gasket oder Cathode Gasket abgedeckt werden. Aufgrund medialer sowie thermischer Anforderungen kommen hier häufig Kleb-Dichtungsmaterialien, wie z.B. Silikon, EPDM-Kautschuk und PTFE zum Einsatz. Darüber sind auch der Einsatz von Hotmeltsystemen auf Basis von Polyolefin (PO), reaktiven Hotmelts (PUR, POR) möglich. Entgegen dem Stand der Technik erfolgt die Applikation des polymeren Kleb-Dichtmaterials zur Abdichtung nicht in einem erhabenen Teil oder auf einer flachen Platte, sondern innerhalb einer nutenförmigen Vertiefung. Basierend auf der Ausbildung einer Nut-Feder-Verbindung kann hierdurch der Kleb-Dichtspalt ohne zusätzliche Füllstoffe im polymeren Kleb-Dichtmaterial vorgegeben werden. Auftretende Schälbeanspruchungen können zudem minimiert und die wirksame Kleb-Dichtfläche gleichzeitig vergrö-ßert werden.

Durch die Auslagerung der Kleb-Dichtebene außerhalb der Kontaktebene der beiden BIP-Plattenhalbschalen, die mit den zwei stoffschlüssig und ggf. zusätzlich formschlüssig miteinander verbundenen plattenförmigen Materialien gebildet worden sind und die gleichzeitige Kippung im Vergleich zur Fügeebene wird das Belastungsszenario so abgeändert, dass keine reine Scherbeanspruchung bzw. vereinfachte Schälbeanspruchung mehr auftreten kann. Dadurch kann sowohl die Festigkeit, als auch die Lebensdauer der Klebung/Dichtung gesteigert werden. Zusätzlich zu dieser mechanischen Entlastung kann die Kleb-Dichtgeometrie so gestaltet werden, dass der Kontakt mit einem Kühlmedium vermindert oder ausgeschlossen werden kann, wodurch etwaige Alterungs- oder Degradationserscheinungen weniger ausgeprägt auftreten. Die Gestaltung dieser Geometrien entspricht in ihrem Höhenprofil dem des Flow-Fields, wodurch eine Abstützung und Unterstützung der Abdichtung nach dem Verspannen eines Brennstoffzellenstapels gewährleistet werden kann. Unterstützend kann eine die auftretenden mechanischen Beanspruchungen entlang der Klebung erreichte Heftung mittels Laserschweißen im Walzspalt zusätzlich verringernd beeinflussen.

Dabei besteht grundsätzlich die Möglichkeit, die entsprechenden Nut-Feder-Geometrien sowohl asymmetrisch, als auch symmetrisch auszubilden. Die asymmetrische Ausbildung kann bei entsprechender Auslegung der restlichen Zellbestandteile den benötigten Bauraum ggf. verringern. Die symmetrischen Mechanismen bieten hingegen tendenziell erhöhte Kleb-Dichtflächenquerschnitte und eine zusätzliche Möglichkeit der beiderseitigen Abstützung der gefügten BIP-Halbschalen beim späteren Stapeln der Zellen zu einem Stapel. Dadurch wird das Risiko minimiert, während dieses Vorgangs unerwünschte Verformungen der BIP und/oder anderer Zellbestandteile hervorzurufen. In beiden Fällen kann durch die eingebrachte Nut-Feder-Geometrie die Möglichkeit der passgenauen Ausrichtung der Bipolarplatten zueinander erreicht werden. Dies erfolgt über konstruktive Maßnahmen, die Bereiche mit definiertem Abstand und Bereiche mit einem eingeformten technischen Nullspalt erzeugen. Hieraus resultiert ein "Einrasten" der beiden Bipolarplattenhälften ineinander in einer definierten Relativausrichtung der plattenförmigen Materialien zueinander. Da hierdurch die Anforderungen an die Präzision der Positionierungselemente herabgesenkt wird, kann die für den Fügeprozess benötigte Anlagenperipherie weniger komplex und damit kosteneffizienter und störunanfälliger ausgelegt werden. Durch eine Kombination des Klebe-Dichtprozesses mit dem Schweißprozess kommt die vereinfachte Ausrichtung auch diesem zugute und verringert damit die Anforderungen an *in situ* Überprüfungen der Plattenpositionen zueinander oder macht diese redundant.

Zudem können dadurch reproduzierbarere Ergebnisse in der Fügequalität erzielt werden.

Wesentlichen Bestandteil der Offenlegung bildet der kontinuierliche Bandprozess, in dem eine Aushärtung bzw. ein physikalisches Abbinden des polymeren Kleb-Dichtmaterials erfolgt. Eine Spaltüberbrückung sowie der Ausgleich von Toleranzen sind durch Kleben deutlich einfacher zu realisieren als beim Schweißen mit technischem Nullspalt. Aus diesem Grund eignet sich das Kleben zur Abdichtung der Bipolarplattenhalbschalen vorteilhaft. Um niedrige Verzüge innerhalb der Bipolarplattenhälften zu realisieren und somit eine Schüsselung der plattenförmigen Materialien zu vermeiden, sollte in einer weiteren vorteilhaften Ausgestaltung die gezielte Erwärmung eines mindestens einseitig vorapplizierten, chemisch härtenden duroplastischen oder physikalisch abbinden thermoplastischen Polymersystems als polymeres Kleb-Dichtmaterial mittels Laserstrahlung, bspw. CO₂-Laser bei bevorzugt seitlichem einstrahlen in den Spalt zwischen den Platten und direkter Erwärmung, Erweichung und/oder Aufschmelzung des polymeren Kleb-Dichtmaterials oder mittels IR-Strahlung (Wellenlänge 1000 nm -1100 nm) single mode Faserlaser, Diodenlaser (Wellenlänge zwischen 400 und 1000nm), grünem Laserstrahl (532 nm) oder blauen Laserstrahl (445-450nm), Heizstrahler, humm3-xenon-flashlamp, Induktion oder einer anderen Erwärmungsquelle mit hoher Aufheizrate kurz vor der eigentlichen Fügestelle erreicht werden.

Zwischen Laserstrahlquelle und Oberfläche eines bzw. der plattenförmigen Elemente(s) kann der Laserstrahl bspw. über einen remote-Scanner (Galvanisch angetrieben) oder über einen Polygonscanner ausgelenkt werden. Die Bandzufuhr kann sowohl von Rollen von bereits umgeformten plattenförmigen Elementen erfolgen oder der Umformprozess erfolgt unmittelbar nach dem Abwickeln von einer Rolle. Die BIP-Halbschalen bzw. das plattenförmige Material sind bzw. ist hierbei mindestens halbseitig beschichtet.

Der Einsatz eines CO₂-Lasers verhindert eine erhöhte Einkopplung im Metall, wodurch die Materialdicke der Bipolarplatten weiter verringert werden kann. Anschließend erfolgt ein physikalisches Erstarren beim Abkühlen (Hotmelts) oder durch eine chemische Reaktion kann eine Aushärtung des Kleb-Dichtmaterials erreicht werden. Das Risiko zum Durchschweißen oder Schneiden, wie dies mit anderen Strahlquellen auftreten kann, bleibt hierbei aus. Dieses Risiko wird jedoch deutlich reduziert. Die Lasertechnologie ermöglicht so bspw. in Kombination mit einem Remote-Scanner die Ausbildung eines gezielten als auch graduierten Temperaturfeldes unmittelbar vor dem Kleb-Dichtspalt sowie im Bereich der Dichtnaht. In Verbindung mit einer temperaturgesteuerten (bspw. Thermografie) Laserleistungsregelung sowie einem hochdynamischem Ablenksystem (bspw. Galvanometer-Scanner) lässt sich ein graduiertes Temperaturfeld ausbilden und somit neben einer Prozessregelung auch eine Inline-Kontrolle im Bereich der Kleb-Dichtnaht realisieren. Durch den direkten Energieeintrag in das polymere Kleb-Dichtmaterial wird es möglich, ein größeres Stoffspektrum einzusetzen (höherschmelzende Klebstoffe bzw. Klebstoffe mit hohen Vernetzungstemperaturen, neuartige reaktivier und vernetzbare Dispersionen).

Ebenso möglich ist die Verwendung einer konturierten und beheizbaren Laminierwalze bzw. Heißsiegelmaschine oder Ultraschall-Rollnahtsiegelns, die lediglich ein Aufschmelzen des Kleb-Dichtmaterials im Fügebereich ermöglicht und zusätzlich eine Annäherung zwischen den BIP-Halbschalen realisiert.

Aufgrund der kurzzeitigen sowie hohen Aufheizrate kann durch Selbstabschreckung oder auch unterstützend durch andere Kühlmedien unmittelbar nach dem Fügespalt ein Plastifizieren des Kleb-Dichtmaterials erreicht werden. Bei der Kleb-Dichtmaterialauswahl kann man eine minimale ChloridKonzentration berücksichtigen. Als thermoplastische Systeme eignen sich neben dem Einsatz von technischen Polymeren wie Polyolefinen, insbesondere auch Hochleistungsthermoplasten wie PEI, PAI, PEEK als Kleb-Dichtmaterial. Beispielhaft kann hier der thermoplastische Klebfilm nolax A21.4500 auf Polypropylenbasis genannt werden. Solche nicht reaktiven Thermoplastfilme zeichnen sich u.a. durch lange Haltbarkeiten bei gleichzeitig niedrigen Anforderungen an die Lagerbedingungen und die Möglichkeit des Vorabauftrags auf eine Oberfläche der beiden miteinander zu fügenden plattenförmigen Materialien aus. Zudem ist durch die Verfügbarkeit in verschiedenen Stärken (bspw. 100 µm und 20 µm) eine Anpassung an Geometrie, Funktionalität und Abdichtvermögen materialseitig möglich. Die Wiederaufschmelzbarkeit ermöglicht nicht nur das Recycling des Verschnitts, sondern eröffnet außerdem Chancen, später gezielt Fügungen durch Temperatureinwirkung zu lösen, um so bspw.

### Reparaturen zu ermöglichen.

Es ist zudem bekannt, dass Klebstoffe eine signifikante Menge unerwünschter Stoffe enthalten können, die zu einem elektrischen Leitfähigkeitsanstieg in einem Kühlmedium führen und damit Zellkurzschluss und Korrosion verursachen können. So können zur Herstellung Kupferiodid u. Kaliumiodid zur Stabilisierung der Polymersysteme in einem Kleb-Dichtmaterial eingesetzt werden. Hier sind "elektrisch neutrale" Systeme zu bevorzugen.

Durch ein zusätzliches Heften im unmittelbar benachbarten Bereich der Flanken mittels Laserstrahl können zudem zusätzlich auftretende Schälbeanspruchungen auf die Dichtklebung abgemindert werden.

Es kann eine Vorbehandlung der Edelstahl Oberfläche der plattenförmigen Materialien zur Steigerung der Oberflächenenergie durch nasschemische, bspw. mittels MEK (Methylethylketon und/oder HCL Verfahren oder mit physikalischen Verfahren, wie z.B. Laserstrukturierung oder mittels AD-Plasmabehandlung durchgeführt werden, bevor der eigentliche Fügevorgang durchgeführt wird. Insbesondere topografiebeeinflussende Verfahren, wie die Laserstrukturierung oder die Erzeugung von Hinterschneidungsstrukturen, wie beim sog. Nanosculpturing durch den Einsatz von Chlorwasserstoff, ermöglichen haftfeste sowie langzeitstabile Verbindungen.

Das Fügen der metallischen plattenförmigen Elemente mittels Kleben kann beispielsweise durch das Aufbringen eines Kleb-Dichtmaterials vor dem Laserschweißprozess zur Kontaktierung im Flow Field erfolgen. Dieser kann über eine rotierende Walze, die mit einer die Klebekontur definierenden Textur versehen ist, Sprüh- oder Rakelauftrag auf das lokal definiert umgeformte Band, mit dem die plattenförmigen Materialien ausgebildet werden, aufgebracht werden. Alternativ kann das Kleb-Dichtmaterial auch über eine entsprechende Düse auf die jeweilige BIP-Halbschale, die mit einem der zwei plattenförmigen Materialien gebildet ist, in eine daran ausgebildete nutenförmige Vertiefung aufgebracht werden. Die Beschichtungsdicke liegt im Bereich < 0,15 mm. Bei thermoplastischen Filmen kann ein gezielter vorgelagerter Zuschnittprozess das Handling während des Klebprozesses oder des Aufbringens auf mindestens einen der beiden Fügepartner vereinfachen.

Nachfolgend soll die Erfindung beispielhaft näher erläutert werden.

Dabei zeigen:
Figur 1 in schematischer Form ein Blockschaltbild, das beispielhaft und schematisch die Verfahrensführung verdeutlicht;
Figur 2a-c Möglichkeiten für die Ausbildung von Vertiefungen und Erhebungen an den zwei metallischen plattenförmigen Materialien und
Figur 3 in schematischer Form ein Beispiel einer Anlage mit der das erfindungsgemäße Verfahren durchgeführt werden kann.

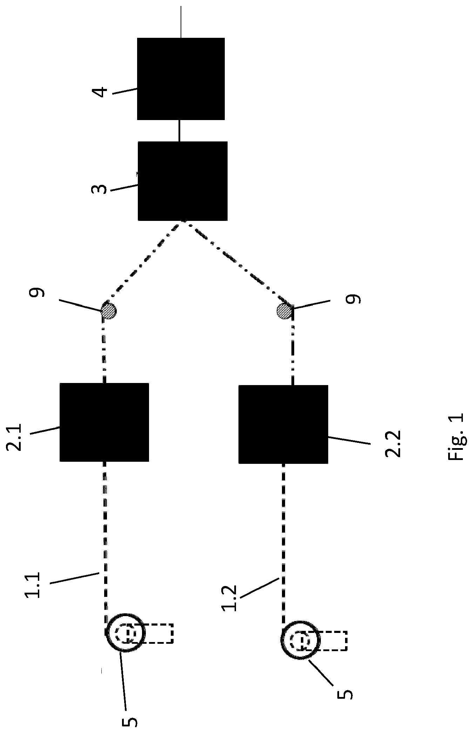

In Figur 1 ist schematisch der Verfahrensablauf dargestellt. Dabei wird metallisches plattenförmiges Material 1.1 und 1.2 synchron und parallel zueinander von jeweils einer Rolle 5 abgewickelt und in Richtung einer Einrichtung 2.1 und 2.2, die jeweils zum Umformen ausgebildet sind, gefördert. In den Einrichtungen 2.1 und 2.2 werden die komplementären nutenförmigen Vertiefungen 6 und die Erhebungen 7 durch lokal definiertes Umformen senkrecht von einem äußeren Randbereich bis zum gegenüberliegend angeordneten Randbereich ausgebildet. Zusätzlich können bei diesem Beispiel auch die Durchbrechungen für die Zufuhr und Abführung, beispielsweise durch Stanzen und dann um diese umlaufend ebenfalls nutenförmige Vertiefungen 6 und Erhebungen 7 ausgebildet werden. Die Walzen 5 führen das zuvor mit bspw. Kohlenstoff einseitig beschichtete Metallband.

Von den Einrichtungen 2.1 und 2.2 werden die plattenförmigen Materialien 1.1 und 1.2 über Umlenkrollen 9 umgelenkt und aufeinander zu gerichtet und dann in die Einrichtung 3, die zum Fügen ausgebildet ist bewegt.

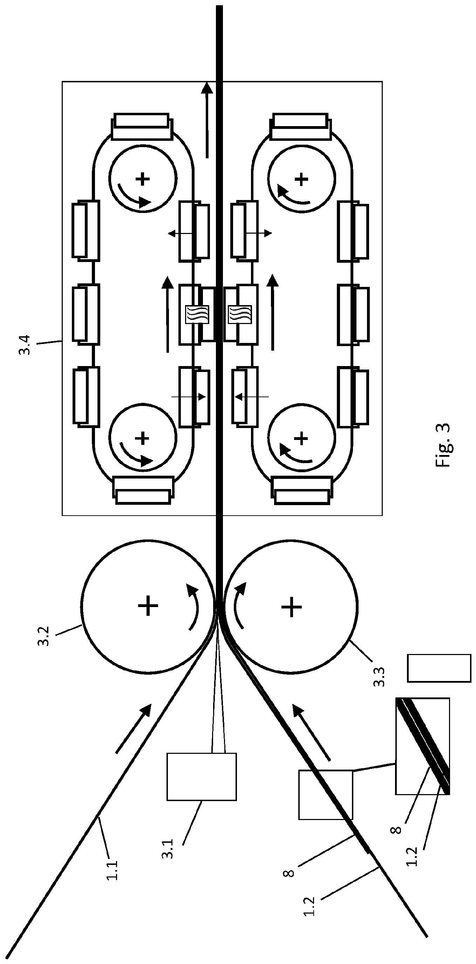

In der Einrichtung 3 wird auch das Fügen parallel zur Vorschubbewegungsrichtung der plattenförmigen Materialien 1.1 und 1.2 durchgeführt. Dazu wird ein Laserstrahl (3.1, Fig. 3) auf mindestens eines der plattenförmigen Materialen 1.1 oder 1.2, bevorzugt in den Spalt zwischen den plattenförmigen Materialien unmittelbar bevor sie in einen Walzenspalt einfahren, gerichtet und dort lokal definiert eine Erwärmung durchgeführt wird, bis dort mindestens die Glasübergangstemperatur des Metalls erreicht worden ist. In dem Walzenspalt wirken so große Druckkräfte auf die plattenförmigen Materialien, dass die plattenförmigen Materialien 1.1 und 1.2 aus dem gleichen Metall stoffschlüssig durch Plattieren in den parallel zur Vorschubbewegungsrichtung verlaufenden äußeren Randbereichen stoffschlüssig und fluid- und gasdicht verbunden worden sind und/oder eine Schweißnahtheftung 10 erzielt wird.

In der Einrichtung 3 erfolgt auch eine Erwärmung, die zur Initiierung einer chemischen Aushärtung bzw. Abbindung des organischen Kleb-Dichtmaterials 8 führt. Dabei wirken ebenfalls Druckkräfte auf die plattenförmigen Materialien 1.1 und 1.2, die sie zusammenpressen. Dafür können dieselben Walzen, wie die zum Plattieren genutzten oder aber gesonderte Walzen genutzt werden, durch die plattenförmigen Materialien sich unmittelbar berührend hindurchbewegt werden. Die Erwärmung und das Applizieren des polymeren Kleb-Dichtmaterials kann, wie im allgemeinen Teil der Beschreibung erwähnt, durchgeführt werden.

Nach dem Fügen mit der Einrichtung 3 werden die mit den plattenförmigen Materialien 1.1 und 1.2 gebildeten und miteinander verbundenen BIP zur Einrichtung 4, die zur Vereinzelung einzelner Bipolarplatten ausgebildet ist, gefördert und dort mit einem Trennverfahren für jeweils eine Brennstoffzelle vereinzelt.

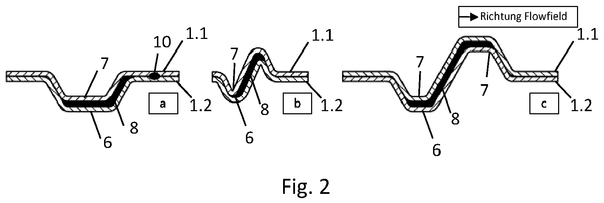

Figur 2a zeigt einen Ausschnitt einer Schnittdarstellung einer asymmetrisch ausgebildeten Verbindung mit einem Klebdichtmaterial 8, das in einem Hohlraum zwischen einer Vertiefung, die im plattenförmigen Material 1.2 und einer Erhebung 7, die komplementär im anderen plattenförmigen Material 1.1 ausgebildet ist, angeordnet und ausgehärtet worden ist. Zusätzlich dargestellt ist eine seitlich zur Klebung angeordnete Schweißlinse als Schweißnahtheftung 10 der während des Fügens im Walzspalt erzeugten Heftung, welche in Richtung Flow Field orientiert ist und die eine Schälbeanspruchung im Dichtungsbereich bei mechanischer Beanspruchung zusätzlich erschwert bzw. unterbindet. Die Klebflächen sowie erforderlichen Haftungsfestigkeiten können hierdurch wesentlich reduziert werden.

In den Figuren 2b und 2c sind entsprechende mögliche symmetrische Geometrien für nutenförmige Vertiefungen 6 und Erhebungen 7 dargestellt.

Bei der Umformung wurde darauf geachtet, dass der Hohlraum zwischen Vertiefung 6 und Erhebung 7 so groß ausgefallen ist, dass eine ausreichende Menge an Kleb-Dichtmaterial 8 hineinpasst und auch darin appliziert wird, um den Hohlraum vollständig auszufüllen, um eine ausreichenden Haft- und Dichtwirkung zu erreichen. Dabei soll aber vermieden werden, dass Kleb-Dichtmaterial 8 beim Fügen aus dem Hohlraum verdrängt wird. Zusätzlich wird eine genaue Ausrichtung und Positionierung der Biploarplatten durch die aneinander liegenden Flanken erreicht.

Figur 3 zeigt eine beispielhafte Anordnung der zwischen den Walzen 3.2 und 3.3 geführten Bipolarplattenhälften 1.1. und 1.2 mit dazwischenliegend aufgebrachtem organischem Kleb-Dichtmaterial 8. Der exemplarisch dargestellte eine Laser inkl. dynamischer Strahlführung 3.1 kann durch weitere über die Walzenbreite der Bipolarplatte verteilte Systeme ergänzt sein und auch unterschiedliche Wellenlängen sowie optische Abbildungen und Leistungsklassen aufweisen. Hierdurch kann sowohl eine ausschließliche Erwärmung der Bipolarplatten für den Laserwalzplattierprozess, eine Heftung und/oder Kontaktierung der Bipolarplattenhälften 1.1 und 1.2 und/ oder Erwärmung des organischen Kleb-Dichtmaterials 8 erreicht werden. Nach dem Walzenspalt ermöglicht ein Corrugator 3.4 die zuverlässige Erzielung einer vollständig ausgehärteten oder physikalisch abgebundenen Fügeverbindung.

## Patentansprüche

1. Verfahren zur Herstellung von Bipolarplatten für Brennstoffzellen mittels Fügen, bei dem
jeweils von einer Rolle (5) plattenförmiges metallisches Material (1.1, 1.2) paarweise und synchron in Richtung einer Einrichtung (4), die zur Vereinzelung von Brennstoffzellen ausgebildet ist, gefördert wird, wobei
in dem plattenförmigen Material (1.1, 1.2) senkrecht zur Vorschubbewegungsrichtung des plattenförmigen Materials (1.1, 1.2) und von einem äußeren Randbereich bis zu einem gegenüberliegend angeordneten äußeren Randbereich ausgebildete nutenförmige Vertiefungen (6) und/oder Erhebungen (7) ausgebildet sind oder nach dem Abwickeln von der jeweiligen Rolle (5) durch Umformung ausgebildet werden, wobei die jeweils komplementär ausgebildeten nutenförmigen Vertiefungen (6) und/oder Erhebungen (7) in den zwei plattenförmigen Materialien (1.1, 1.2) beim Fügen formschlüssig ineinander greifen und in nutenförmige Vertiefungen (6), die an einem der zwei plattenförmigen Materialien (1.1) ausgebildet sind, ein polymeres Kleb-Dichtmaterial (8) vor dem Fügen eingebracht wird und
zusätzlich parallel zur Vorschubbewegungsrichtung der plattenförmigen Materialien (1.1, 1.2) in den zwei äußeren Randbereichen ebenfalls nutenförmige Vertiefungen (6) und/oder Erhebungen (7) lückenlos ausgebildet sind oder nach dem Abwickeln von der jeweiligen Rolle (5) durch Umformung ausgebildet werden, wobei die jeweils komplementär ausgebildeten nutenförmigen Vertiefungen (6) und/oder Erhebungen (7) in den zwei plattenförmigen Materialien (1.1, 1.2) beim Fügen formschlüssig ineinander greifen und
in diese nutenförmige Vertiefungen (6), die an einem der zwei plattenförmigen Material (1.1, 1.2) ausgebildet sind, ein polymeres Kleb-Dichtmaterial (8) vor dem Fügen eingebracht wird oder
bei einer Bewegung der zwei gleichen plattenförmigen Materialien (1.1, 1.2) aufeinander zu durch den Spalt zwischen zwei rotierenden Walzen, bei der die zwei plattenförmigen Materialien (1.1, 1.2) mit ihren aufeinander zu weisenden Oberflächen in Kontakt gebracht werden, mindestens ein Laserstrahl in die zwei sich gegenüberliegend angeordneten äußeren Randbereiche der plattenförmigen Materialien (1.1, 1.2) gerichtet wird, so dass dort eine lokal definierte Erwärmung der plattenförmigen Materialien (1.1, 1.2) in den Randbereichen erreicht und dann im jeweiligen Walzenspalt eine fluiddichte stoffschlüssige Verbindung der beiden plattenförmigen Materialien (1.1, 1.2) durch die Kombination der Erwärmung mit der im Walzenspalt wirkenden Druckkraft auf die zwei plattenförmigen Materialien (1.1, 1.2) in den äußeren Randbereichen und
in den Bereichen in denen nutenförmige Vertiefungen (6) und/oder Erhebungen (7) mittels des dort applizierten und ausgehärteten oder vernetzten polymeren Kleb-Dichtmaterials (8) ausgebildet wird und
im Anschluss daran die Vereinzelung in einzelne Bipolarplatten für Brennstoffzellen in der Einrichtung mit einem Trennverfahren durchgeführt wird.

2. Verfahren nach Anspruch 1, **dadurch gekennzeichnet, dass** nach dem Applizieren des polymeren Klebe-Dichtmaterials (8) in die nutenförmigen Vertiefungen (6) an einem der zwei plattenförmigen Materialien (1.1 oder 1.2) und dem formschlüssigen Eingreifen einer komplementär ausgebildeten Kontur des jeweils anderen plattenförmigen Materials (1.1 oder 1.2) zum Fügen ein Energie Eintrag erfolgt, der zur Aushärtung oder Vernetzung des Kleb-Dichtmaterials (8) führt und die zwei plattenförmigen Materialien (1.1, 1.2) mittels Druckkraftwirkung gegeneinander gepresst werden.

3. Verfahren nach einem der vorhergehenden Ansprüche, **dadurch gekennzeichnet, dass** der mindestens eine Laserstrahl zur lokal definierten Erwärmung der plattenförmigen Materialien (1.1, 1.2) in den äußeren Randbereichen in den Spalt zwischen den sich aufeinander zu bewegenden plattenförmigen Materialien (1.1, 1.2) gerichtet wird, bevor die plattenförmigen Materialien (1.1, 1.2) im Spalt zwischen den jeweiligen Walzen zusammengedrückt werden.

4. Verfahren nach einem der vorhergehenden Ansprüche, **dadurch gekennzeichnet, dass** um Durchbrechungen, die für eine Zufuhr von Brennstoff oder Oxidationsmittel und eine Abführung von Wasser und nicht reagiertem Brennstoff und Oxidationsmittel in den plattenförmigen Materialien (1.1, 1.2) ausgebildet sind, nutenförmige Vertiefungen (6) und/oder Erhebungen (7) ausgebildet sind oder werden, die beim Fügen formschlüssig ineinander greifen und vor dem Fügen in Vertiefungen Kleb-Dichtmaterial (8) eingebracht wird.

5. Verfahren nach einem der vorhergehenden Ansprüche, **dadurch gekennzeichnet, dass** Vertiefungen (6) und Erhebungen (7) in den zwei plattenförmigen Materialien (1.1, 1.2) so ausgebildet werden, dass nach dem Fügen im Bereich zwischen einer Vertiefung (6) in einem plattenförmigen Material (1.1 oder 1.2) und einer Erhebung (7), die am jeweils anderen plattenförmigen Material (1.1 oder 1.2) ausgebildet ist, jeweils Hohlraum vorhanden ist, der mit dem Kleb-Dichtmaterial (8) ausgefüllt wird.

6. Verfahren nach einem der vorhergehenden Ansprüche, **dadurch gekennzeichnet, dass** Vertiefungen (6) und/oder Erhebungen (7) asymmetrisch oder symmetrisch ausgebildet werden.

7. Verfahren nach einem der vorhergehenden Ansprüche, **dadurch gekennzeichnet, dass** eine direkte Erwärmung des polymeren Kleb-Dichtmaterials im Walzspalt durch Bestrahlung mit defokussierter Laserstrahlung durchgeführt wird.

8. Verfahren nach einem der vorhergehenden Ansprüche, **dadurch gekennzeichnet, dass** eine Vorbehandlung der zu fügenden Oberflächen der plattenförmigen Materialien nasschemisch oder physikalischen Verfahren, insbesondere einer Laserstrukturierung, vor der Durchführung der eigentlichen Fügung durchgeführt wird.

9. Verfahren nach einem der vorhergehenden Ansprüche, **dadurch gekennzeichnet, dass** ein lokales Heften der plattenförmigen Elemente, der Bippolar-Platten-Hälften unmittelbar neben dem mit organischem Kleb-Dichtmaterial ausgestatteten Innenbereichen mittels Laserstrahlung im Walzspalt durchgeführt wird.
